Europäisches Patentamt

European Patent Office

Office européen des brevets

(11) Veröffentlichungsnummer: **0 254 121**
A2

(12) **EUROPÄISCHE PATENTANMELDUNG**

(21) Anmeldenummer: 87109745.7

(22) Anmeldetag: 07.07.87

(51) Int.Cl.³: **B 65 H 75/10**
**B 31 C 3/00, B 29 C 53/84**

(30) Priorität: 19.07.86 DE 3624522

(43) Veröffentlichungstag der Anmeldung:
27.01.88 Patentblatt 88/4

(84) Benannte Vertragsstaaten:
FR GB IT NL

(71) Anmelder: Christian Majer GmbH & Co. KG
Maschinenfabrik
Schwärzlocher Strasse 10
D-7400 Tübingen(DE)

(72) Erfinder: Majer, Helmut
Schleifmühleweg 29
D-7400 Tübingen(DE)

(74) Vertreter: Möbus, Rudolf, Dipl.-Ing.
Hindenburgstrasse 65
D-7410 Reutlingen(DE)

(54) Wickelkörper.

(57) Der insbesondere als Textilspulenhülse eingesetzte Wickelkörper (10) aus mehreren miteinander fest verbundenen Lagen aus wendelförmig gewickelten Bahnen weist vorzugsweise auf seiner Außenseite vorzugsweise mehrere Lagen auf, die aus Bahnen (13 - 15) gewickelt sind, die mit einem Thermoplast- oder Heißschmelzkleber beschichtet sind. Durch die beschichteten Bahnen, die heiß in den Wickelkörper eingebracht werden, wird eine größere Stabilität des Wickelkörpers gegen Radialkräfte erreicht.

Fig. 2

EP 0 254 121 A2

P 6249 EU

0254121

# Wickelkörper

B e s c h r e i b u n g :

Die Erfindung betrifft einen rohrförmigen Wickelkörper mit
mehreren miteinander fest verbundenen Lagen aus wendelförmig gewickelten Bahnen und ein Verfahren zur Herstellung
eines solchen Wickelkörpers.

Wickelkörper der eingangs genannten Art in zylindrischer
oder konischer Form werden in großem Umfange als Träger
und Wickelkerne für Garnspulen, Bandspulen o. dgl. verwendet. In modernen Textilmaschinen werden diese Spulenkörper
teilweise hohen Drehzahlen ausgesetzt, bei denen die üblichen, aus mehreren, miteinander verleimten Papierbahnen
gefertigten Körper aufgrund der starken Radialkräfte aufreißen oder brechen. Dabei hat sich herausgestellt, daß
die Stabilität dieser Wickelkörper gegen Radialkräfte insbesondere durch die verwendeten wassergelösten Leime und
die Aufweichung, welche die Papierbahnen durch diese Leime

... 2

P 6249 EU

unmittelbar vor und während des Wickelvorganges erfahren, begrenzt wird. Es ist zwar bereits vorgeschlagen worden, für eine größere Standfestigkeit von aus Papierbahnen gefertigten Spulenträgern gegen Biegekräfte ein Papiermaterial zu verwenden, das an Fasern überwiegend Chemiefasern und ein synthetisches Bindemittel aufweist (EU-OS 170 094). Die hierbei erzielte höhere Stabilität ergibt aber nur eine unzureichende Verstärkung der Wickelrohre gegen Radialkräfte.

Der Erfindung liegt die Aufgabe zugrunde, einen Wickelkörper der eingangs genannten Art so auszubilden, daß er höhere Zentrifugalbelastungen als bisher bekannte Wickelkörper aushält und dabei preiswerter herstellbar ist als übliche Wickelkörper.

Die gestellte Aufgabe wird mit einem Wickelkörper der eingangs genannten Art erfindungsgemäß dadurch gelöst, daß mindestens eine der Bahnen mit einer Thermoplastoder Heißschmelzkleber-Beschichtung, die durch Erwärmen zur Klebeschicht aktiviert wird, versehen ist.

Es ist zwar bekannt, daß die die Außenumfangsfläche bildende Bahn eines Papierwickelkörpers eine synthetische Papierbahn ist, die Fasern aus einem thermoplastischen Kunststoff aufweist, so daß sich der Wickelkörper mit Kalibrierwerkzeugen einwandfrei glätten läßt (DF-PS 31 05 828). Hier handelt es sich jedoch nicht um eine eigentliche Beschichtung mit thermisch aktivierbarem Material, die im Wickelverband als Heißschmelzkleber wirken könnte.

P 6249 EU

Bei dem erfindungsgemäß ausgebildeten rohrförmigen Wickelkörper wird einerseits der Vorteil erzielt, daß die beschichteten Bahnen, die keine Papierbahnen sein müssen,
eine sehr feste gegenseitige Verbindung erhalten und einen
Versteifungsringkörper für die übrigen, z. B. mit üblichen
Naßklebern miteinander verbundenen Bahnen bilden. Andererseits wird durch die zur Aktivierung der Beschichtung
stark erwärmten beschichteten Bahnen Wärme in den Wickelkörper gebracht, welcher beim Wickeln bereits eine Trocknung von naßverklebten anderen Bahnen, z. B. Papierbahnen,
einleitet und dadurch die Wassereinwirkungszeit auf die
Bahnen merklich verkürzt. Dies bedeutet nicht nur, daß das
nachträgliche Trocknen der Wickelkörper weniger Energieaufwand erfordert, sondern bei naßverklebten Papierbahnen
auch eine verminderte Strukturänderung durch Feuchtigkeit
und damit auch eine erhöhte Reißfestigkeit und Widerstandsfähigkeit gegen Radialkräfte dieser Bahnen.

Bei der Verwendung solcher Wickelkörper als Textilspulenhülsen können vorteilhafterweise mehrere beschichtete
Papierbahnen den Außenmantel des Wickelkörpers bilden. In
diesem Falle bilden die beschichteten Papierbahnen oder
aus anderem Material, z. B. einem Gewebe, gebildeten Bahnen einen äußeren Umfangspanzer zur Stützung der aus unbeschichteten Papierbahnen gewickelten inneren Lagen des
Wickelkörpers. Die beschichteten Papierbahnen können aber
auch mittlere Wickellagen bilden, wo sie bei der Herstellung der Wickelkörper Trocknungswärme sowohl in die äußeren als auch in die inneren Lagen des Wickelkörpers abgeben.

P 6249 EU

Es hat sich als vorteilhaft erwiesen, wenn die mit einem
Thermoplast- oder einem Heißschmelzkleber beschichteten
Bahnen jeweils gruppenweise im Wickelkörper auftreten,
also immer mehrere dieser beschichteten und innig miteinander
verbundenen Bahnen auftreten. Dabei läßt sich die
Wirkung der Beschichtung der Bahnen noch dadurch erhöhen,
daß die Bahnen aus einem Material gefertigt sind, das eine
größere Reißfestigkeit als die unbeschichteten Bahnen aufweist.

Als besonders vorteilhaft und energiesparend hat sich erwiesen,
die beschichteten Bahnen unmittelbar vor dem Einlaufen
in eine sogenannte Spiralwickelmaschine durch
Infrarot-Bestrahlung zu erwärmen und damit die Klebeschicht
zu aktivieren. Dies wird im Normalfall vor dem
Wickelriemen der Maschine geschehen, kann aber auch mit
einer oder mehreren beschichteten Bahnen nach dem Wickelriemen
erfolgen. Bei nicht überlappendem Wickeln kann auch
noch der entstehende Schlitz von Bahnkante zu Bahnkante
mittels eines extrudierten Plastmaterials, Klebstoff oder
Harz ausgefüllt werden, wodurch eine besonders glatte
Oberfläche erzielt wird.

Nachfolgend wird ein Ausführungsbeispiel eines erfindungsgemäß
ausgebildeten Wickelkörpers anhand der beiliegenden
Zeichnung näher beschrieben.

Im einzelnen zeigen:

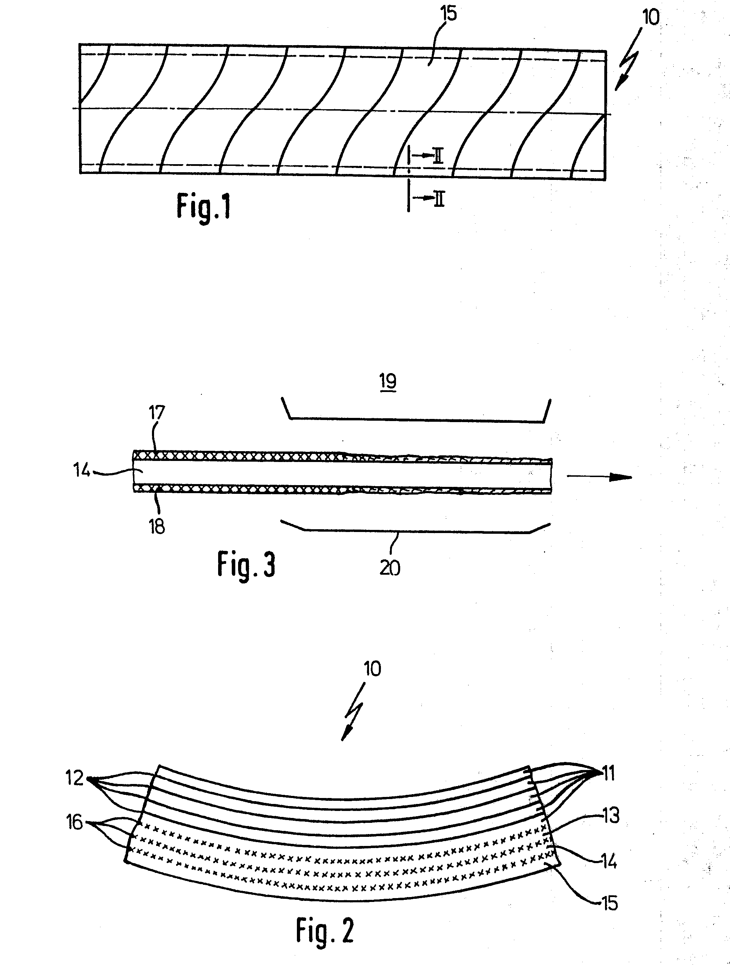

Fig. 1                eine Seitenansicht eines Abschnittes
                      eines auf einer Spiralwickelmaschine
                      gefertigten mehrlagigen Wickelkörpers;

P 6249 EU

| | |
|---|---|
| Fig. 2 | einen Querschnitt durch die Wandung des Wickelkörpers entlang der Linie II - II in Fig. 1 in gegenüber Fig. 1 stark vergrößertem Maßstab; |
| Fig. 3 | eine schematische Ansicht einer im Wickelkörper verwendeten, mit einem Thermoplast- oder Heißschmelzkleber beschichteten Papierbahn beim Durchgang durch eine Infrarot-Heizvorrichtung. |

Fig. 1 zeigt einen rohrförmigen Wickelkörper als hohlzylindrische Textilspulenhülse 10, die aus mehreren Lagen
von wendelförmig gewickelten Papierbahnen unterschiedlicher Beschaffenheit besteht. Gemäß der Schnittdarstellung
der Fig. 2 besteht der Körper aus fünf inneren Lagen 11
aus Papierbahnen, die jeweils durch eine mit einer starken
Linie angedeutete Klebstoffschicht 12 miteinander ganzflächig verbunden sind. Die Klebstoffschichten 12 bestehen
aus einem wasserlöslichen Klebstoff. An die fünf inneren
Lagen 11 schließen sich nach außen drei Lagen 13, 14 und
15 an, die jeweils von einer Papierbahn gebildet werden,
die mit einem Thermoplast- oder Heißschmelzkleber beschichtet ist. Diese Beschichtungen ergeben in Fig. 2
durch Kreuze angedeutete Verbindungsschichten 16 im
Wickelkörper. Die Papierbahn, welche die äußerste Lage 15
bildet, ist nur auf einer Seite beschichtet, während die
Papierbahnen, welche die beiden anschließenden Schichten
14 und 13 bilden, auf beiden Seiten mit einer Thermoplastoder Heißschmelzkleberschicht 17 und 18 (Fig. 3) versehen
sind.

P 6249 EU

Fig. 3 zeigt schematisch, wie die mit den Thermoplastoder Heißschmelzkleberschichten 17 und 18 versehene
Papierbahn 14 unmittelbar vor dem Einlauf in eine sogenannte Spiralwickelmaschine zwischen einem Infrarot-Heizkopf 19 und einem Reflektor 20 hindurchbewegt wird, wodurch die Schichten 17 und 18 klebrig werden, also als
Klebstoffschichten aktiviert werden.

Die beschichteten Papierbahnen können auch die inneren
Lagen oder mittlere Lagen eines mehrlagigen Wickelkörpers
bilden. Sie sind zweckmäßig aus einem Papier gefertigt,
das eine größere Reißfestigkeit als die unbeschichteten,
die Lagen 11 bildenden Papierbahnen aufweist. Die Bahnen
müssen aber nicht ausschließlich Papierbahnen sein, sondern könnten teilweise auch aus einem anderen flexiblen
Material bestehen, beispielsweise einem Textilmaterial.

/L

P 6249 EU

Patentansprüche :

1. Rohrförmiger Wickelkörper mit mehreren miteinander fest
   verbundenen Lagen aus wendelförmig gewickelten Bahnen,
   dadurch gekennzeichnet, daß mindestens eine der Bahnen
   (14) mit einer Thermoplast- oder Heißschmelzkleber-
   Beschichtung (17, 18), die durch Erwärmen zur Klebeschicht aktiviert wird, versehen ist.

2. Wickelkörper, insbesondere Textilspulenhülse, nach Anspruch 1, dadurch gekennzeichnet, daß mehrere ein- oder
   beidseitig beschichtete Trägerbahnen (13 - 15) den
   Außenmantel des Wickelkörpers (10) bilden.

3. Wickelkörper nach Anspruch 1, dadurch gekennzeichnet,
   daß die mindestens eine beschichtete Trägerbahn eine
   mittlere Wickellage bildet.

4. Wickelkörper nach einem der Ansprüche 1 bis 3, dadurch
   gekennzeichnet, daß die beschichteten Trägerbahnen
   (13 - 15) gruppenweise im Wickelkörper (10) auftreten.

5. Wickelkörper nach einem der Ansprüche 1 bis 4, dadurch
   gekennzeichnet, daß die beschichteten Bahnen (13 - 15)
   aus einem Material bestehen, das eine größere Reißfestigkeit als die unbeschichteten Bahnen aufweist.

0254121

P 6249 EU

6. Verfahren zur Herstellung eines Wickelkörpers nach einem der Ansprüche 1 bis 5 auf einer Spiralwickelmaschine für mehrere Bahnen, dadurch gekennzeichnet, daß die mit einem Thermoplast- oder Heißschmelzkleber beschichteten Bahnen (13 - 15) vor dem Einlaufen in die Spiralwickelmaschine mindestens einseitig durch Infra- rot-Bestrahlung (Heizköpfe 19, 20) erwärmt werden und heiß in oder auf den Wickel (10) ein- bzw. aufgebracht werden.

0254121

1/1

Fig.1

Fig. 3

Fig. 2